# EUROPÄISCHE PATENTSCHRIFT

(11) **EP 1 190 909 B1**
(45) Veröffentlichungstag und Bekanntmachung des Hinweises auf die Patenterteilung: **27.12.2006**
(21) Anmeldenummer: 01121328.7
(22) Anmeldetag: 06.09.2001
(51) Int. Cl.: B60R 13/02

(54) **Säulenverkleidung im Innenraum eines Kraftfahrzeuges**
Pillar garnishing member in a vehicle
Garniture de pilier dans un véhicule

(30) Priorität: 23.09.2000 DE 10047271
(43) Veröffentlichungstag der Anmeldung: 27.03.2002
(73) Patentinhaber: Volkswagen AG, 38436 Wolfsburg (DE)
(72) Erfinder: Scholz, Eckhard, 38154 Königslutter (DE); Marschall, Uwe, 38442 Wolfsburg (DE); Viehweger, Hans, 38550 Isenbüttel (DE)

(56) Entgegenhaltungen:
- DE-A- 19 807 309
- US-A- 5 294 164

## Beschreibung

Die Erfindung bezieht auf eine Säulenverkleidung im Innenraum eines Kraftfahrzeuges mit einem Verkleidungsteil, das eine ortsfeste Säule, insbesondere die A-Säule, zumindest bereichsweise abdeckt, und mit Mitteln zum Toleranzausgleich des Spaltes am Übergang zwischen Säulenverkleidung und Schalttafel.

Aus dem Stand der Technik sind verschiedene Säulenverkleidungen im Innenraum eines Kraftfahrzeuges der gattungsgemäßen Art bekannt. Aus der EP 0 899 163 A1 ist dazu zunächst eine Säulenverkleidung im Innenraum eines Kraftfahrzeuges mit einem Verkleidungsteil bekannt, das eine ortsfeste Säule zumindest teilweise umschließt. Es ist weiterhin bekannt, bei derartigen Säulenverkleidungen zum Toleranzausgleich des Spaltes zwischen der montierten Säulenverkleidung und der Schalttafel entsprechende Ausgleichselemente, wie beispielsweise Clipse oder Clipverbindungen, vorzusehen. Derartige Anordnungen haben an sich den Vorteil, daß ein zufriedenstellender Toleranzausgleich zwischen der montierten Säulenverkleidung und der Schalttafel erreicht wird, nachteilig ist bei diesen Anordnungen der konstruktiv hohe Aufwand zum Erreichen des Toleranzausgleiches sowie sich daraus ergebende optische Mängel dieser Anordnungen.

Aus der DE 197 48 780 A1 ist weiterhin ein Ausgleichselement, insbesondere zur Erzielung eines Null-Spalt-Maßes, zwischen der Seitenwand der Schalttafel eines Kraftfahrzeuges und der benachbarten Säulenverkleidung bekannt. Es ist dieses Ausgleichselement im wesentlichen durch eine konstruktiv aufwendige, eine federnde Bewegung des Ausgleiehskörpers zulassende Anordnung gekennzeichnet. Im weiteren weist auch diese Anordnung in optischer Hinsicht die zuvor erwähnten Mängel auf.

Ein Befestigungsystem mit einen Säulenverkleidung und Mitteln zum Toleranzausgleich nach dem Oberbegriff des Anspruchs 1 ist aus der US 5 294 164 A bekannt.

Der Erfindung liegt die Aufgabe zugrunde, das bekannte Befestigungssystem im Innenraum eines Kraftfahrzeuges unter Beibehaltung der bisherigen Vorteile in der Weise zu verbessern, daß sie einen im wesentlichen spaltfreien Übergang zwischen Säulenverkleidung und Schalttafel liefern und trotzdem einfacher und wirtschaftlicher als die bekannten Ausführungsformen herstellbar sind, im weiteren soll die gewünschte Anordnung ein ansprechendes äußeres Erscheinungsbild abgeben.

Die Aufgabe wird erfindungsgemäß die Merkmale des kennzeichenden Teils des Anspruchs 1 gelöst.

Bei der bevorzugten Ausführungsform der vorliegenden Erfindung umfaßt die am Übergang zwischen Säulenverkleidung und Schalttafel angeordnete Zwangsführung zum Toleranzausgleich eine an der Schalttafel angeordnete Führung für das eine Ende der Säulenverkleidung. Es ist dabei zweckmäßig die Führung an der Schalttafel für das eine Ende der Säulenverkleidung am Schalttafel-Grundkörper angeordnet.

Es empfiehlt sich, daß die Führung an der Schalttafel für das eine Ende der Säulenverkleidung durch eine an der Schalttafel angeordnete Führungsnut gebildet ist. Es ist dies eine konstruktiv sehr einfache Möglichkeit zur Ausbildung der Führung an der Schalttafel.

Bei einer alternativen Ausführungsform der vorliegenden Erfindung ist vorgesehen, daß die Führung an der Schalttafel für das eine Ende der Säulenverkleidung durch eine von dem Endbereich des Grundkörpers der Schalttafel und dem Endbereich eines weiteren Schalttafelelementes der Schalttafel gebildete Führungsnut gebildet ist.

Nach einem letzten Vorschlag der vorliegenden Erfindung ist die Führung an der Schalttafel für das eine Ende der Säulenverkleidung durch eine an dem Luftverteiler der Schalttafel angeordnete Führungsnut gebildet.

Die vorliegende Erfindung ist in den Figuren der Zeichnung in mehreren Ausführungsbeispielen dargestellt. Es zeigen:
- Fig. 1: eine schematische, explosionsartige Darstellung einer A-Säulenverkleidung mit dazugehöriger A-Säule gemäß dem Stand der Technik,
- Fig. 2: einen Schnitt durch die Säulenverkleidung gemäß der Linie B-B der Fig. 1,
- Fig. 3: einen Schnitt durch die Säulenverkleidung gemäß der Linie A-A der Fig. 1,
- Fig. 4: einen Schnitt durch die Säulenverkleidung gemäß der Linie C-C der Fig. 1,
- Fig. 5: die schematische Darstellung eines Teil-Querschnittes einer ersten Ausführungsform der erfindungsgemäßen Säulenverkleidung,
- Fig. 6: einen schematischen Teil-Querschnitt durch eine weitere Ausführungsform der erfindungsgemäßen Säulenverkleidung.

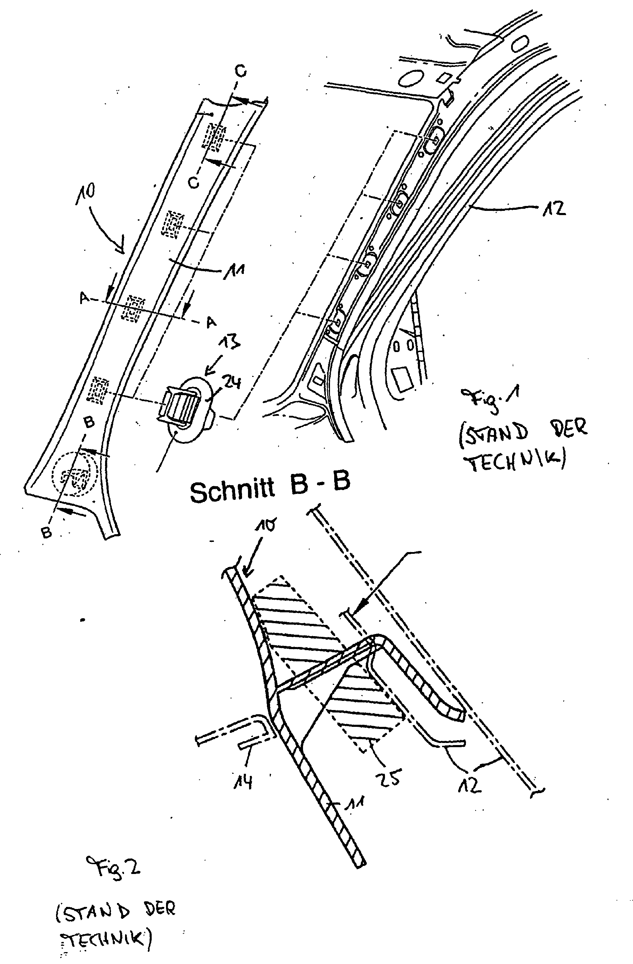

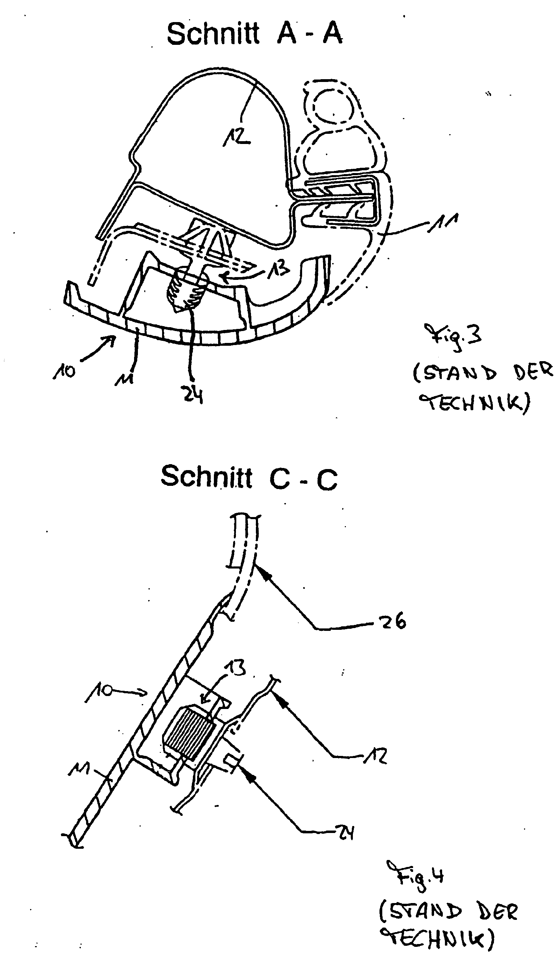

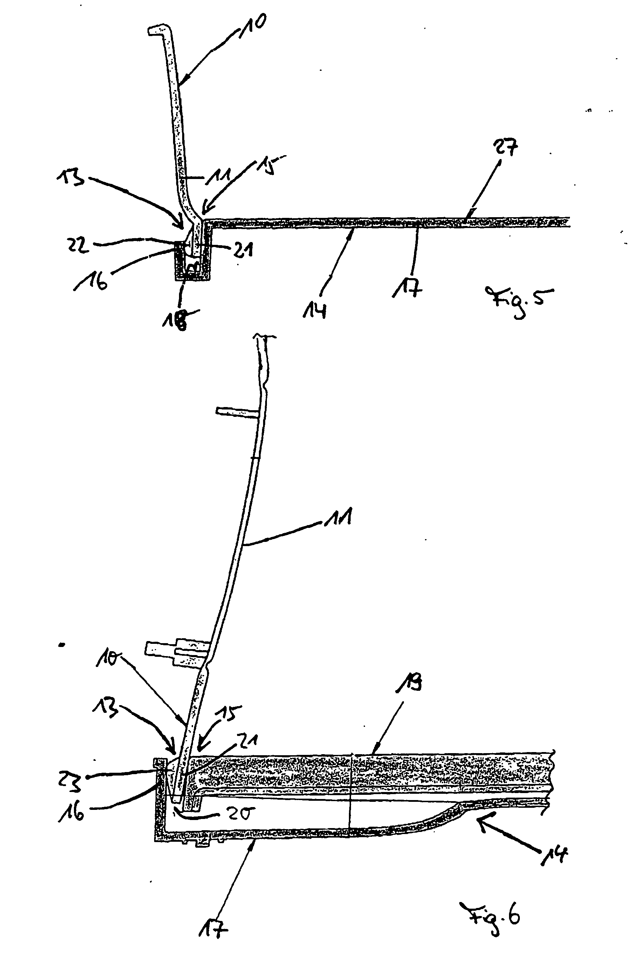

Die erfindungsgemäße Säulenverkleidung im Innenraum eines Kraftfahrzeuges ist generell mit 10 bezeichnet. Die Säulenverkleidung 10 weist ein Verkleidungsteil 11 auf, das eine ortsfeste Säule 12, insbesondere die A-Säule, eines Kraftfahrzeuges, zumindest bereichsweise abdeckt, und Mittel 13 zum Toleranzausgleich des Spaltes am Übergang zwischen der Säulenverkleidung 10 und der Schalttafel 14. In der Fig. 1 der Zeichnung sowie den dazugehörigen Schnitt-Zeichnungen der Fig. 2, 3 und 4 ist dazu eine Säulenverkleidung 10 mit dazugehöriger ortsfester Säule 12, wie insbesondere A-Säule, gemäß dem Stand der Technik dargestellt. In diesem Fall sind die Mittel 13 zum Toleranzausgleich des Spaltes am Übergang zwischen Säulenverkleidung 10 und Schalttafel 14 durch mehrere Clipse 24 ausgebildet. Es ist im weiteren am Übergang zwischen Säulenverkleidung 10 und Schalttafel 14, siehe die Fig. 2 der Zeichnung, ein an der ortsfesten Säule 12 anliegendes Dichtelement 25 vorgesehen. Die Fig. 3 und 4 der Zeichnung zeigen dazu weitere Ansichten der Säulenverkleidung 10 gemäß dem Stand der Technik, in der Fig. 4 der Zeichnung ist dazu am oberseitigen Ende der Säulenverkleidung 10 ein Formhimmel 26 teilweise dargestellt.

Bei der erfindungsgemäßen Säulenverkleidung 10 sind, siehe die Fig. 5 und 6 der Zeichnung, die Mittel 13 zum Toleranzausgleich durch eine am Übergang zwischen Säulenverkleidung 10 und Schalttafel 14 angeordnete Zwangsführung 15 für die Säulenverkleidung 10 gebildet. Die am Übergang zwischen Säulenverkleidung 10 und Schalttafel 14 angeordnete Zwangsführung 15 zum Toleranzausgleich umfaßt dabei eine an der Schalttafel 14 angeordnete Führung 16 für das eine Ende, im vorliegenden Fall das untere Ende der Säulenverkleidung 10. Es ist dabei bei den in den Fig. 5 und 6 der Zeichnung dargestellten Ausführungsformen die Führung 16 an der Schalttafel 14 für das untere Ende der Säulenverkleidung 10 am Schalttafel-Grundkörper 17 angeordnet.

Bei der Ausführungsform gemäß der Fig. 5 der Zeichnung ist die Führung 16 an der Schalttafel 14 für das untere Ende der Säulenverkleidung 10 durch eine an der Schalttafel 14 angeordnete Führungsnut 18 gebildet.

Demgegenüber ist bei der Ausführungsform gemäß der Fig. 6 der Zeichnung die Führung 16 an der Schalttafel 14 für das untere Ende der Säulenverkleidung 10 durch eine von dem Endbereich des Grundkörpers 17 der Schalttafel 14 und dem Endbereich eines weiteren Schalttafelelementes 19 der Schalttafel 14 gebildete Führungsnut 20 gebildet. Bei dem Schalttafelelement 19 kann es sich dabei z.B. um eine Slush-Haut handeln.

Die am Übergang zwischen Säulenverkleidung 10 und Schalttafel 14 angeordnete Zwangsführung 15 zum Toleranzausgleich umfaßt weiterhin wenigstens ein an einem Ende, im vorliegenden Fall dem unteren Ende der Säulenverkleidung 10, angeordnetes Führungseingreifmittel 21. Es umfaßt dabei das an dem unteren Ende der Säulenverkleidung 10 angeordnete Führungseingreifmittel 21 bei der in der Fig. 5 der Zeichnung dargestellten Ausführungsform außenseitig wenigstens eine Verdickung 22 zum Eingriff in die an der Schalttafel 14 befindliche Führungsnut 18 oder 20. Bei der in der Fig. 6 der Zeichnung dargestellten Ausführungsform umfaßt das an dem unteren Ende der Säulenverkleidung 10 angeordnete Führungseingreifmittel 21 außenseitig wenigstens eine Rippe 23 zum Eingriff in die an der Schalttafel 14 befindliche Führungsnut 18 oder 20. In beiden Fällen kann die wenigstens eine Verdickung 22 oder Rippe 23 innen- und/oder außenseitig am unteren Ende der Säulenverkleidung 10 angeordnet sein.

Die Führung 16 an der Schalttafel 14 für das untere Ende der Säulenverkleidung 10 kann auch durch eine an einem Luftverteiler 27 der Schalttafel 14 angeordnete Führungsnut 18 gebildet sein, siehe die Fig. 5 der Zeichnung.

Mit der erfindungsgemäßen Säulenverkleidung 10 wird erstmalig durch die Zwangsführung der Säulenverkleidung 10 an der Schalttafel 14 bzw. deren Grundkörper 17 mit sehr einfachen Mitteln ein spaltfreier Übergang zwischen Säulenverkleidung 10 und Spalttafel 14 geschaffen. Die erfindungsgemäße Säulenverkleidung 10 ist einfach und wirtschaftlich herstellbar und bietet ein ansprechendes äußeres Erscheinungsbild, insbesondere weil die Mittel zum Toleranzausgleich von außen nicht sichtbar sind. Im weiteren kommen bisher erforderliche zusätzliche konstruktive Elemente wie Clipse oder dergleichen zur Toleranzaufnahme gänzlich in Fortfall.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann insbesondere die Zwangsführung 15 für die Säulenverkleidung 10 zur Schaffung eines spaltfreien Überganges zwischen Säulenverkleidung 10 und Schalttafel 14 eine von den Figuren der Zeichnung abweichende Ausgestaltung aufweisen.

### BEZUGSZEICHENLISTE

- 10: Säulenverkleidung
- 11: Verkleidungsteil
- 12: ortsfeste Säule
- 13: Mittel zum Toleranzausgleich
- 14: Schalttafel
- 15: Zwangsführung
- 16: Führung (an 14 für 10)
- 17: Schalttafel-Grundkörper
- 18: Führungsnut (an 14)
- 19: weiteres Schalttafelelement
- 20: Führungsnut (an 14 und 19)
- 21: Führungseingreifmittel
- 22: Verdickung (an 10)
- 23: Rippe (an 10)
- 24: Clipse
- 25: Dichtelement
- 26: Formhimmel
- 27: Luftverteiler

## Patentansprüche

1. Befestigungssystem mit einer Säulenverkleidung (10) im Innenraum eines Kraftfahrzeuges mit einem Verkleidungsteil (11), das eine ortsfeste Säule (12), insbesondere die A-Säule, zumindest bereichsweise abdeckt, und mit Mitteln (13) zum Toleranzausgleich des Spaltes am Übergang zwischen Säulenverkleidung (10) und Schalttafel (14),
wobei die Mittel (13) zum Toleranzausgleich durch eine am Übergang zwischen Säulenverkleidung (10) und Schalttafel (14) angeordnete Zwangsführung (15) für die Säulenverkleidung (10) gebildet sind und
wobei die Zwangsführung (15) eine an der Schalttafel (14) angeordnete Führung (16) für das eine Ende der Säulenverkleidung (10) umfasst, wobei die Führung (16) durch eine mit der Schalttafel (14) einstückig ausgeführte Führungsnut (18) oder durch eine von dem Endbereich eines Grundkörpers (17) der Schalttafel (14) und dem Endbereich eines weiteres Schalttafelelements (19) gebildete Führungsnut (20) gebildet ist, wobei die Führungsnut (18,20) zwei Nutwandungen aufweist,
**dadurch gekennzeichnet,**
**dass** die Zwangsführung (15) wenigstens ein an einem Ende der Säulenverkleidung (10) angeordnetes Führungseingreifmittel (21) umfasst, das außen- und/oder innenseitig wemigtens eine Verdickungs (22) mit einer vorübergehenden Querschnittsvergrößerung zum Eingriff in die Führungsnut (18, 20) umfasst, derart, dass der Teil der Verdickung (22) mit dem größten Querschnitt mit beiden Nutwandungen der Führungsnut (18, 20) zusammenwirkt.

2. Befestigungssystem nach Anspruch 1,
**dadurch gekennzeichnet, dass** die Führung (16) am der Schalttafel (14) für das eine Ende der Säulenverkleidung (10) am Schalttafel-Grundkörper (17) angeordnet ist.

3. Befestigungssystem nach Anspruch 1,
**dadurch gekennzeichnet, dass** die Verdickung (22) eine Rippe (23) ist.

4. Befestigungssystem nach einem der Ansprüche 1 bis 3,
**dadurch gekennzeichnet, dass** die Führung (16) an der Schalttafel (14) für das eine Ende der Säulenverkleidung (10) durch eine an dem Luftverteiler (27) der Schalttafel (14) angeordnete Führungsnut (18) gebildet ist.

## Claims

1. Fastening system having a pillar trim (10) in the interior of a motor vehicle, having a trim part (11) which covers a positionally fixed pillar (12), in particular the A pillar, at least in regions, and having means (13) for tolerance compensation of the gap at the transition between the pillar trim (10) and a dashboard (14),
the means (13) for tolerance compensation being formed by a positive guide (15), which is arranged at the transition between the pillar trim (10) and the dashboard (14), for the pillar trim (10) and
the positive guide (15) comprising a guide (16), which is arranged on the dashboard (14), for one end of the pillar trim (10), the guide (16) being formed by a guide groove (18) which is integrally formed with the dashboard (14) or by a guide groove (20) which is formed by the end region of a base body (17) of the dashboard (14) and the end region of a further dashboard element (19), the guide groove (18, 20) having two groove walls,
**characterized**
**in that** the positive guide (15) has at least one guide engagement means (21) which is arranged at an end of the pillar trim (10) and which, at the outside and/or at the inside, comprises at least one thickened portion (22) having a transitional cross-sectional enlargement for engaging in the guide groove (18, 20) such that that part of the thickened portion (22) with the greatest cross section interacts with the two groove walls of the guide groove (18, 20).

2. Fastening system according to Claim 1,
**characterized in that** the guide (16) on the dashboard (14) for one end of the pillar trim (10) is arranged on the dashboard base body (17).

3. Fastening system according to Claim 1,
**characterized in that** the thickened portion (22) is a rib (23).

4. Fastening system according to one of Claims 1 to 3,
**characterized in that** the guide (16) on the dashboard (14) for one end of the pillar trim (10) is formed by a guide groove (18) which is arranged on the air distributor (27) of the dashboard (14).

## Revendications

1. Système de fixation avec une garniture de pilier (10) pour l'intérieur d'un véhicule, comprenant un élément de garniture (11) recouvrant au moins partiellement un pilier fixe (12), notamment le pilier A, ainsi que des moyens (13) pour l'égalisation de la tolérance de la fente au niveau de la jonction entre la garniture de pilier (10) et le tableau de commande (14),
les moyens (13) pour l'égalisation de la tolérance étant constitués d'un dispositif de guidage forcé (15) pour la garniture de pilier (10), placé au niveau de la jonction entre la garniture de pilier (10) et le tableau de commande (14), et le dispositif de guidage forcé (15) comprenant une glissière (16) placée au niveau du tableau de commande (14) pour l'une des extrémités de la garniture de pilier (10), la glissière (16) étant constituée d'une rainure de guidage (18) réalisée d'une seule pièce avec le tableau de commande (14) ou d'une rainure de guidage (20) composée de la partie finale d'un corps de base (17) du tableau de commande (14) et de la partie finale d'un autre élément du tableau de commande (19), la rainure de guidage (18, 20) comportant deux parois,
**caractérisé en ce que**
le dispositif de guidage forcé (15) possède au moins un dispositif d'intervention pour le guidage (21) placé à l'une des extrémités de la garniture de pilier (10), comprenant au moins une surépaisseur (22) sur sa face externe et/ou interne, avec un agrandissement partiel de la section transversale en vue de l'intervention dans la rainure de guidage (18, 20), si bien que la partie de la surépaisseur (22) ayant la section transversale la plus importante peut interagir avec les deux parois de la-rainure de guidage (18, 20).

2. Système de fixation selon la revendication 1, **caractérisé en ce que** la glissière (16) au niveau du tableau de commande (14) est disposée sur le corps de base (17) du tableau de commande pour l'une des extrémités de la garniture de pilier (10).

3. Système de fixation selon la revendication 1, **caractérisé en ce que** la surépaisseur (22) forme une nervure (23).

4. Système de fixation selon l'une des revendications 1 à 3, **caractérisé en ce que** la glissière (16) au niveau du tableau de commande est constituée d'une rainure de guidage (18) placée au niveau du diffuseur d'air (27) du tableau de commande (14), pour l'une des extrémités de la garniture de pilier (10).
